Europäisches Patentamt

(19) **European Patent Office**

Office européen des brevets

(11) Numéro de publication: **O 006 379**
**B1**

(12) **FASCICULE DE BREVET EUROPEEN**

(45) Date de publication du fascicule du brevet: **29.12.82**

(51) Int. Cl.³: **B 01 D 47/02,**
**B 01 D 53/18, A 61 L 2/18,**
**A 61 L 2/20**

(21) Numéro de dépôt: **79400369.9**

(22) Date de dépôt: **07.06.79**

(54) Appareil pour réaliser une interaction entre un gaz et un liquide, notamment pour réaliser un lavage du gaz par le liquide.

(30) Priorité: **12.06.78 FR 7817439**

(43) Date de publication de la demande:
**09.01.80 Bulletin 80/1**

(45) Mention de la délivrance du brevet:
**29.12.82 Bulletin 82/52**

(84) Etats contractants désignés:
**DE IT NL**

(56) Documents cités:
**US - A - 3 518 817**
**US - A - 3 633 340**
**US - A - 3 823 531**

(73) Titulaire: **Rosier, Pierre Sully**
**9 Allée du Progrès**
**F-92170 Vanves (FR)**
(73) Titulaire: **Rosier-Diligenti, Yolande**
**9 Allée du Progrès**
**F-92170 Vanves (FR)**

(72) Inventeur: **Rosier, Pierre Sully**
**9, allée du Progrès**
**F-92170 Vanves (FR)**
Inventeur: **Rosier, Pascal**
**9, allée du Progrès**
**F-92170 Vanves (FR)**

(74) Mandataire: **Bruder, Michel**
**10 rue de la Pépinière**
**F-75008 Paris (FR)**

Courier Press, Leamington Spa, England.

# Appareil pour réaliser une interaction entre un gaz et un liquide. notamment pour réaliser un lavage du gaz par le liquide

La présente invention concerne un appareil pour réaliser une interaction entre un gaz et un liquide, applicable notamment au lavage du gaz par le liquide ou vice-versa, comportant une chambre traversée de bas en haut par le courant de gaz et délimitée, à sa partie inférieure, par un élément séparateur perméable, tel qu'une grille, subdivisant le courant de gaz ascendant en une pluralité de filets élémentaires, des moyens pour introduire dans cette chambre une certaine quantité de liquide devant réagir avec le gaz, des moyens pour mettre en dépression ladite chambre de manière à maintenir en suspension le liquide dans cette chambre, au-dessus de l'élément séparateur perméable, au moyen d'une multitude de bulles de gaz formées, d'une manière régulière, sur toute la surface de l'élément séparateur perméable, par les filets élémentaires gazeux aspirés vers le haut, et, à la partie supérieure de l'appareil, un étage déshumidificateur. On connaît déjà des appareils de ce genre, tels que celui décrit dans le brevet US No. 3 823 531. Cet appareil permet de réaliser une interaction entre un gaz et un liquide. Dans un tel appareil, chaque bulle de gaz formée par subdivision du courant de gaz ascendant à son passage à travers la grille, traverse d'une manière uniforme le volume de liquide de lavage situé au-dessus de la grille, suivant un mouvement ascendant. De ce fait chaque bulle de gaz se déplace de bas en haut sans contrainte, si bien qu'une interaction entre gaz et liquide s'effectue uniquement à la surface de la bulle. Autrement dit la partie centrale de la bulle n'est pas atteinte et par conséquent traitée par le liquide, d'où une neutralisation imparfaite du gaz.

La présente invention vise essentiellement à remédier à cet inconvénient procurant un appareil de conception particulièrement simple et qui assure une interaction optimale entre le gaz et le liquide. A cet effet cet appareil est caractérisé en ce qu'au-dessus de la chambre d'interaction est disposée une grille de coalescence cylindrique fixée au col d'un divergent et l'étage déshumidificateur comprend des moyens assurant un écoulement tourbillonnaire du gaz.

L'appareil suivant l'invention offre l'avantage que la grille de coalescence cylindrique permet de retenir le liquide qui est entraîné, à partir de la chambre d'interaction, par les bulles de gaz, vers le haut, et de ramener ce liquide condensé dans la chambre à bulles. Par ailleurs du fait que l'étage déshumidificateur est du type à écoulement tourbillonnaire du gaz, cet étage permet de retenir, par centrifugation, les particules liquides fines qui peuvent passer à travers la grille de coalescence. En outre l'écoulement tourbillonnaire produit à la sortie de l'appareil se répercute en amont et entraîne la création, au sein de la chambre d'interaction à bulles, d'un double mouvement tourbillonnaire, à la fois autour d'un axe vertical et d'un axe horizontal, si bien que chaque bulle originelle est réintroduite et sectionnée plusieurs fois dans la barbotage et le brassage avant d'être reprise par le cyclone d'asséchement supérieur. La démultiplication ainsi obtenue de la bulle originelle, par suite de ce phénomène de perturbation cyclonique et d'un passage éventuel à travers un ou plusieurs étages supplémentaires, assure une parfaite émulsion et dilution entre les poussières, les gaz et tout autre agent polluant, et le ou les liquides de traitement. L'appareil suivant l'invention permet d'obtenir des émulsions très fines et très stables.

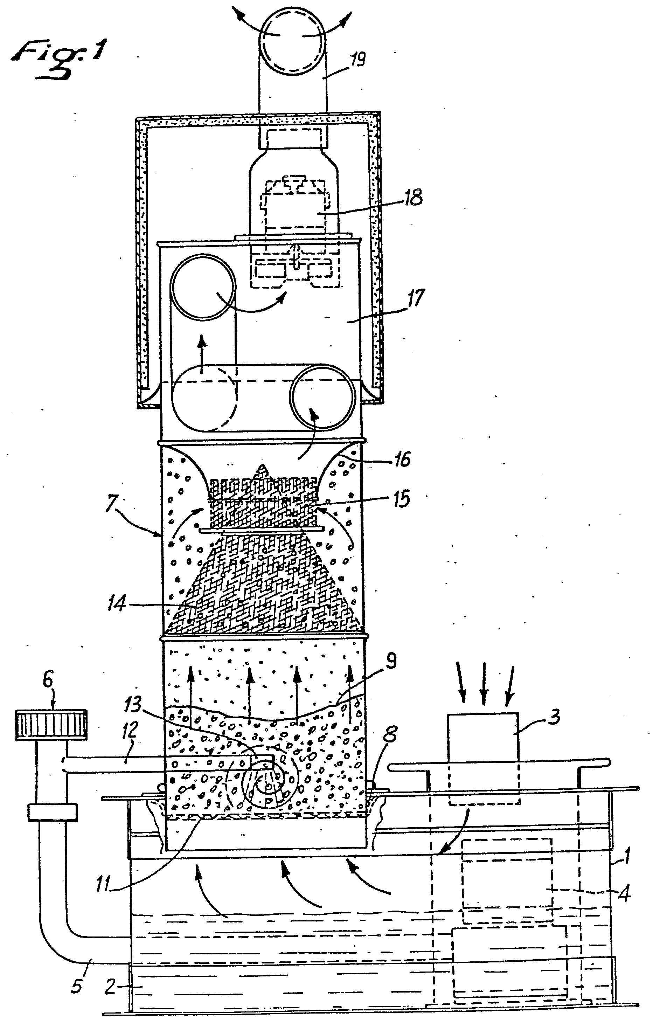

L'appareil suivant l'invention peut être avantageusement utilisé pour la neutralisation de vapeurs corrosives, la décontamination, le dépoussiérrage, la déshumidification, la stérilisation, toute action bactéricide, etc. On décrira, à titre d'exemples non limitatifs, une forme d'exécution de la présente invention en référence au dessin annexé sur lequel la figure 1 est une vue en coupe verticale schématique d'un appareil de lavage d'un gaz par un liquide, à un seul niveau de traitement.

L'appareil représenté sur la figure 1 comprend, à sa partie inférieure, un bac 1 formant réservoir pour un liquide de lavage 2, par exemple de l'eau. Ce réservoir présente, à sa partie supérieure, un orifice d'entrée d'air 3, l'air constituant dans ce cas le gaz devant être lavé. Dans le réservoir 1 est logée une pompe de recyclage 4 qui est destinée à refouler le liquide de lavage 2 dans une canalisation 5 sur laquelle est branché un robinet de réglage de débit 6.

L'appareil suivant l'invention comporte par ailleurs une colonne 7, à section droite quelconque, carrée, rectangulaire, circulaire, etc., qui est portée par la face supérieure du réservoir 1 et dont la partie extrême inférieure est engagée dans ce réservoir, en passant à travers un orifice 8 prévu à cet effet.

Dans la partie inférieure de la colonne 7 est prévue une chambre à bulles 9 dans laquelle s'effectue l'interaction entre le gaz et le liquide. Cette chambre à bulles 9 est délimitée à sa partie inférieure, c'est-à-dire vers l'amont en considérant le trajet suivi par l'air, par un élément séparateur perméable 11 qui peut être constitué, par exemple, par une grille à mailles fixes ou variables ou encore par un matériau à cellules ouvertes, telle qu'une mousse de matière plastique.

Une certaine quantité de liquide de lavage peut être introduite dans la chambre d'interaction 9, au moyen d'une canalisation 12 raccordée au robinet de réglage 6 et se terminant par une buse 13 de dispersion du liquide dans la chambre 9.

Au-dessus de la chambre d'interaction 9 sont disposées des grilles de coalescence 14 et 15.

La grille 14 a une forme conique, dont la pointe est dirigée vers le haut et dont la base est solidaire de la paroi de la colonne 7 cylindrique. La grille supérieure 15 est, elle, cylindrique et entoure la pointe de la grille 14, à une certaine distance de la paroi latérale de cette grille, et elle est maintenue fixée dans le col d'un divergent 16 lui-même monté sur la paroi de la colonne 7.

Au-dessus des grilles 14 et 15 est prévu un étage déshumidificateur 17, qui peut être réalisé de toute manière connue en soi, par exemple au moyen de coudes assurant un écoulement tourbillonnaire de l'air.

A la partie supérieure de la colonne 7 est monté un ventilateur aspirant 18 dont le côté refoulement est relié à une buse de sortie d'air 19.

Le fonctionnement de l'appareil est le suivant: Si on met tout d'abord en marche uniquement le ventilateur aspirant 18, l'air ambiant est aspiré dans l'appareil de lavage selon l'invention en suivant le tracé indiqué par les flèches sur le dessin. Autrement dit, l'air pénètre dans le réservoir 1 à travers la buse d'entrée d'air 3, puis il s'écoule de bas en haut à travers l'élément séparateur perméable 11, la chambre 9 et il sort de l'appareil à la partie supérieure, par la buse 19.

Pour assurer le lavage du gaz, on introduit, dans la chambre d'interaction 9, une quantité prédéterminée de liquide de lavage 2. A cet effet on met en marche la pompe 4 et on règle, au moyen du robinet 6, le débit de manière à introduire, dans la chambre d'interaction 9, par la canalisation 12 et la buse 13, une certaine quantité de liquide. Ce liquide est alors mis immédiatement en suspension dans la chambre 9 du fait que le courant d'air principal qui traverse l'élément séparateur perméable 11, tel qu'une grille ou un élément poreux à cellules ouvertes, est subdivisé en une pluralité de filets élémentaires qui à leur tour forment une multitude de bulles de gaz qui s'élèvent d'une manière régulière dans la chambre d'inter-action 9.

Une fois la quantité prédéterminée de liquide de lavage introduite dans la chambre 9, on coupe l'alimentation en liquide et ce dernier se maintient de lui-même en suspension dans la chambre 9, du fait de la multitude de bulles qui le traversent d'une manière continue et régulière. On obtient ainsi une interaction homogène et optimale entre le liquide et le gaz, ce qui assure le meilleur rendement pour l'appareil. Le liquide entraîné par les bulles de gaz vers le haut est retenu en plus grande partie par les grilles de coalescence 14 et 15 et est ramené à partir de ces dernières dans la chambre à bulles 9. Les particules de liquide plus fines, qui peuvent traverser les grilles de coalescence 14 et 15 sont, elles, retenues dans l'étage déshumidificateur 17, si bien que le ventilateur 18 rejette à l'extérieur un gaz épuré et sec.

Du fait que dans la partie supérieure de l'appareil se produit un écoulement tourbillonnaire de gaz, cet écoulement tourbillonnaire se répercute en amont et entraîne la création, au sein de la chambre à bulles 9, d'un double mouvement tourbillonnaire, à la fois autour d'un axe vertical et d'un axe horizontal si bien que chaque bulle originelle est réintroduite et sectionnée plusieurs fois dans le barbotage et le brassage avant d'être reprise par le cyclone d'assèchement supérieur 17.

L'ensemble de la masse de liquide obtenue dans la chambre à bulles 9, animée des deux mouvements tourbillonnaires précités et traversée par les bulles à gaz à mouvement ascendant, est maintenu par capillarité sur la grille inférieure 11. Il se produit en quelque sorte ce que l'on peut appeler un barbotage capillaire.

Comme on l'a dit précédemment, on peut utiliser, comme élément séparateur perméable 11, une grille à mailles fixes ou encore variables. On peut aussi utiliser une grille présentant une pluralité de petites buses venant de moulage avec elles.

Suivant une variante, l'alimentation en liquide de lavage peut s'effectuer uniquement en utilisant la dépression régnant dans la chambre 9, au moyen d'un tube plongeant dans le réservoir de liquide 1.

L'appareil peut fonctionner d'une manière continue ou discontinue On peut par exemple contrôler en permanence le pH du liquide de lavage et commander, dès que ce pH atteint une valeur prédéterminée. une électrovanne en vue de procéder à une vidange du liquide et à un remplacement par une quantité correspondante de liquide de lavage neuf.

L'appareil suivant l'invention peut comporter également un étage de filtration additionnel à base de charbon actif qui peut être placé soit sur la grille séparatrice 11, soit en aval.

La dimension des mailles de la grille séparatrice 11 est fonction de la dépression créée par le ventilateur aspirant 18. Plus le dépression est élevée, plus la dimension des mailles doit être fine. Il faut et il suffit en effet que la force d'attraction exercée par le ventilateur aspirant 18 sur le liquide maintenu en suspension dans la chambre 9 corresponde pratiquement au poids de ce liquide.

Suivant une variante de réalisation on peut prévoir, dans la chambre à bulles 9, au-dessus de la masse de liquide en suspension et traversée par les bulles de gaz, une feuille de matière plastique perforée qui contribue à la régulation du barbotage, les perforations de cette feuille de matière plastique étant traversées d'une manière régulière par des jets de liquide et le gaz entraîné vers le haut.

Suivant une autre variante d'exécution, l'élément séparateur perméable 11 peut être pourvu de moyens permettant d'assurer une injection latérale d'un fluide auxiliaire (liquide ou gaz) exerçant une action complémentaire sur le gaz aspiré vers le haut. Cet élément séparateur perméable 11 peut comporter, par exemple, une multitude de petits tubes capillaires verticaux, dont les parois latérales sont percées de petits trous à travers lesquels peut être injecté, à l'intérieur du chaque tube, le fluide auxiliaire. Cet élément séparateur perméable 11 peut être aussi réalisé au moyen de deux plaques horizontales finement perforées, l'injection du fluide auxiliaire se faisant alors horizontalement dans le volume compris entre ces deux plaques.

Bien qu'il ait été question, dans tous les exemples d'exécution de l'invention qui ont été décrits ci-dessus, de l'application de l'invention au lavage d'un gaz par un liquide, il va de soi que l'appareil peut être utilisé en sens inverse, c'est-à-dire au traitement de liquide par le gaz. Par ailleurs il peut être utilisé dans tous les cas, autres que le lavage proprement dit, où il s'agit de provoquer une interaction physico-chimique entre un gaz et un liquide.

## Revendications

1. Appareil pour réaliser une interaction entre un gaz et un liquide, applicable notamment au lavage du gaz par le liquide ou vice versa, comportant une chambre (9) traversée de bas en haut par le courant de gaz et délimitée, à sa partie inférieure, par un élément séparateur perméable (11), tel qu'une grille, subdivisant le courant de gaz ascendant en une pluralité de filets élémentaires, des moyens (6, 12, 13) pour introduire dans cette chambre une certaine quantité de liquide devant réagir avec le gaz, des moyens (18) pour mettre en dépression ladite chambre de manière à maintenir en suspension le liquide dans cette chambre, au-dessus de l'élément séparateur perméable (11), au moyen d'une multitude de bulles de gaz formées, d'une manière régulière sur toute la surface de l'élément séparateur perméable, par les filets élémentaires gazeux aspirés vers le haut, et, à la partie supérieure de l'appareil, un étage déshumidificateur (17), caractérisé en ce qu'au-dessus de la chambre d'interaction (9) est disposée une grille de coalescence cylindrique (15) fixée au col d'un divergent (16) et l'étage déshumidificateur (17) comprend des moyens assurant un écoulement tourbillonnaire du gaz.

2. Appareil suivant la revendication 1, caractérisé en ce qu'il comporte une autre grille de coalescence (14) de forme conique dont la base est solidaire de la paroi de la colonne cylindrique (7) et dont la pointe, dirigée vers le haut, est entourée par la première grille (15) fixée au divergent (16).

3. Appareil suivant l'une quelconque des revendications 1 et 2, caractérisé en ce qu'une feuille de matière plastique perforée est disposée dans la chambre à bulles (9), au-dessus de la masse de liquide en suspension et traversée par les bulles de gaz.

## Patentansprüche

1. Einrichtung zur Realisierung einer Interaktion zwischen einem Gas und einer Flüssigkeit, insbesondere zur Realisierung einer Wäsche des Gases durch die Flüssigkeit bzw. umgekehrt, welche eine Kammer (9) aufweist, durch welche der Gasstrom von unten nach oben geführt ist, und welche im unteren Abschnitt durch ein durchlässiges Abscheide- bzw. Trennelement (11) wie beispielsweise einen Rost abgeschlossen ist, welcher den hochsteigenden Gasstrom in eine Vielzahl einzelner Strömungsfäden unterteilt, sowie ferner eine Einrichtung (6, 12, 13) zum Einleiten einer gewissen Flüssigkeitsmenge in diese Kammer vor Reaktion mit dem Gas, und eine Einrichtung (18), welche die Kammer in der Weise unter Unterdruck setzt, daß die Flüssigkeit in dieser Kammer oberhalb des durchlässigen Abscheideelementes (11) mit Hilfe einer Vielzahl von Gasblasen in Suspension haltbar ist, welche gleichmäßig auf der gesamten Oberfläche des durchlässigen Abscheideelementes von den nach oben gesogenen Gasströmungsfäden gebildet sind, und welche schließlich im oberen Abschnitt der Einrichtung eine Entfeuchterstufe (17) aufweist, dadurch gekennzeichnet, daß oberhalb der Interaktionskammer (9) ein zylindrischer Rost (15) zur Zusammenführung angeordnet ist, welcher am Halsteil eines divergierenden Elementes (16) befestigt ist, und daß die Entfeuchterstufe (17) eine Einrichtung aufweist, welche eine Gaswirbelströmung sicherstellt.

2. Einrichtung nach Anspruch 1, dadurch gekennzeichnet, daß sie einen weiteren, konisch geformten Rost (14) zur Zusammenführung aufweist, dessen Basis fest mit der Wandung der zylindrischen Interaktionssäule (17) verbunden ist und dessen Spitze nach oben steht und von dem ersten Rost (15) umschlossen ist, welcher an dem divergierenden Element (16) befestigt ist.

3. Einrichtung nach einem der Ansprüche 1 und 2, dadurch gekennzeichnet, daß in der Blasenkammer (9) oberhalb der Masse der in Suspension befindlichen Flüssigkeit eine perforierte Kunststoffolie angeordnet ist, wobei die Gasblasen durch die Blasenkammer strömen.

## Claims

1. Apparatus for realizing an interaction between a gas and a liquid, particularly for realizing the washing of a gas by the liquid, comprising a chamber (9) traversed from bottom to top by the current of gas and defined, in its lower part, by a permeable separator element (11) such as a grid, subdividing the ascending current of gas into a plurality of elementary streams, means (6, 12, 13) for introducing into this chamber a certain quantity of liquid having to react with the gas, means (18) for placing said chamber under depression so as to maintain the liquid in suspension in this chamber, above the permeable separator element (11), by means of a multitude of gas bubbles formed regularly over the whole surface of the permeable separator element, by the elementary gaseous streams sucked upwards, and, in the upper part of the apparatus, a dehumidifier stage (17), characterized in that above the interaction chamber (9) is disposed a cylindrical coalescence grid (15) fixed to the throat of a divergent portion (16) and the dehumidifier stage (17) comprises means ensuring a vortical flow of the gas.

2. Apparatus according to claim 1 wherein it comprises another coalescence grid (14) of conical form whose base is fast with the wall of the cylindrical column (7) and of which the apex, directed upwardly, is surrounded by the first grid (15) fixed to the divergent portion (16).

3. Apparatus according to any of claims 1 and 2 wherein a sheet of perforated plastics material is disposed in the bubble chamber (9), above the mass of liquid in suspension and traversed by the gas bubbles.

Fig.1